# EUROPEAN PATENT SPECIFICATION

(11) **EP 3 217 811 B1**
(45) Date of publication and mention of the grant of the patent: **13.11.2024**
(21) Application number: 14905955.2
(22) Date of filing: 09.12.2014
(51) Int. Cl.: A23L 13/72, A23L 13/60, A23L 5/10, A23L 13/00

(54) **METHOD AND SYSTEM FOR PROCESSING READY-TO-EAT BACON WITH PAN FRIED BACON CHARACTERISTICS**
VERFAHREN UND SYSTEM ZUR VERARBEITUNG VON ESSFERTIGEM SPECK MIT EIGENSCHAFTEN VON IN DER PFANNE GEBRATENEM SPECK
PROCÉDÉ ET SYSTÈME DE TRAITEMENT DU BACON PRÊT-À-CONSOMMER AYANT LES CARACTÉRISTIQUES DU BACON FRIT À LA POÊLE

(30) Priority: 10.11.2014 US 201462077681 P
(43) Date of publication of application: 20.09.2017
(73) Proprietor: Smithfield Foods Inc., Smithfield VA 23430 (US)
(72) Inventor: FRITZ, Michael, Delphi, IN 46923 (US); WHITE, Anthony, Kokomo, IN 46901 (US); PHILLIPS, Jeffrey, Naperville, IL 60565 (US); CATTIN, James, Smithfield, VA 23430 (US); BLONG, Robert, Peru, IN 46970 (US); JOHNSON, Bruce, A., Lisle, IL 60532 (US)
(74) Representative: Vossius & Partner Patentanwälte Rechtsanwälte mbB
(86) International application number: PCT/US2014/069300
(87) International publication number: WO 2016/076896

(56) References cited:
- WO-A1-2014/089308
- WO-A1-2014/089308
- GB-A- 2 048 046
- US-A- 3 614 365
- US-A- 3 920 944
- US-A- 3 920 944
- US-A- 4 999 468
- US-A- 6 045 841
- US-A- 6 132 783
- US-A1- 2012 040 062
- US-A1- 2012 040 062
- US-A1- 2013 105 470
- US-A1- 2013 105 470
- US-B1- 6 743 454
- ERIC KIMURA: "WHAT'S THE DEAL WITH INFRARED BURNERS?", THE BLACK BURNER BROUGHT TO YOU ETUNDRA.COM, 5 July 2014 (2014-07-05), XP055646147, Retrieved from the Internet <URL:http://blog.etundra.com/get-equipped/whats-deal-infrared-burners/> [retrieved on 20191125]

## Description

### FIELD OF THE INVENTION

The present invention relates to methods for processing ready-to-eat bacon with pan-fried bacon characteristics comprising a combination of cooking in a microwave oven and finishing in an infrared searing unit.

### BACKGROUND OF THE INVENTION

Continuous manufacturing processes for pre-cooking or cooking bacon comprise a method where green bellies are received, optionally skinned, injected with brine/cure, hung, thermally processed in a smokehouse where natural and/or liquid smoke is applied, removed from the smokehouse and chilled, pressed, stored in a refrigerated cooler, sliced, and deposited onto a cooking device including a conveyor belt. The slices are transferred along a processing direction via a conveyor belt. A conveyor belt feeds the slices into a continuous cooking device where they are cooked for a sufficient time to obtain desired organoleptic properties. Examples of continuous cooking devices include microwave ovens, belt grill ovens, and impingement convection ovens. The cooked bacon slices are transferred via a conveyor belt to a packaging station.

Food packagers sell cooked bacon to restaurants (e.g., fast-food restaurants). The restaurants use portion sized products such as the bacon on sandwiches. However, raw bacon include long preparation time, a shorter shelf life, fat disposal issues, lower efficiency, high labor costs, and an inconsistent cooking. In order to save time, the products, such as bacon, can be pre-cooked thereby saving an employee time of having to cook the product when preparing a meal. In the fast-food restaurant industry, where time is important and the demand for portion sized products, such as bacon, is high, cooking bacon wastes valuable time. Cost of cleanup and disposal of rendered bacon fat are also concerns in the fast-food restaurant industry. Thus, there exists in the industry a demand for pre-cooked bacon.

A method for pre-cooking sliced bacon is described in US 6,045,841. A method for processing ready-to-eat bacon with pan fried bacon characteristics is described in WO 2014/089308. Pre-cooked bacon is currently produced using microwave energy to thermally process bacon strips sliced from smoked de-rind bacon slabs. The processed bacon slabs are sliced onto a microwave oven belt where the strips are moved into a microwave oven cavity to be thermally processed into pre-cooked bacon. As the slices enter the microwave oven cavity they are bombarded with microwave energy causing friction, and in return, cooking the strips until the desired temperature or finished attributes are attained. Finished pre-cooked bacon has to be cooked to a finished yield of less than 40% and attain a finished temperature of greater than, or equal to, 71°C (160°F). The process time varies based on the thickness and size of the product entering the microwave oven cavity. Once the product has passed through the microwave it is sorted, sheeted, and packaged. Although the pre-cooked bacon has advantages such as convenience and time-saving value, one of the disadvantages of the current process is that the flavor profile of pre-cooked bacon tends to be less intense and less desirable than that of raw bacon that has been prepared on a griddle or in a frying pan. Consumer demand for bacon slices with a "pan-fried" taste and consistency is not satisfactorily provided by current methods of pre-cooking bacon slices. The use of infrared burners as restaurant equipment is described in Kimura (2014). "What's the deal with infrared burners?"eTUNDRA.com. Accordingly, there has been a long-felt need in the food service industry for a method of simulating pan-fried bacon with the convenience and cost-savings of precooked bacon.

### SUMMARY OF THE INVENTION

The present invention is defined by the claims. Accordingly the present invention relates to a method for preparing bacon, comprising: (a) cooking bacon slices in a conveyor microwave oven; and (b) finishing the bacon slices in an infrared searing unit by searing the bacon slices with the infrared searing unit, wherein the infrared searing unit uses infrared energy with a wavelength of about 1 µm to 1 mm, wherein the infrared searing unit uses infrared energy with a frequency of about 300 THz to 300 GHz, and wherein the infrared searing unit cooks the bacon slices for at least about 3-20 seconds.

In accordance with a preferred embodiment the method comprises prior to step (a) (a") providing a bacon slab; and (a') slicing the bacon slab into the bacon slices.

In accordance with a preferred embodiment the microwave oven cooks the bacon slices to a temperature of 38°C-107°C (100-225°F), preferably 79°C-93°C (175-200°F).

In accordance with another preferred embodiment the infrared searing unit cooks the bacon slices to a temperature of 93°C-149°C (200-300°F), preferably 74°C (165°F).

In accordance with a further preferred embodiment the infrared searing unit cooks the bacon slices for 4-12 seconds, 6-9 seconds, or 12 seconds.

In accordance with a more preferred embodiment the infrared searing unit is a conveyor searing unit the belt of which moves at 1.5 to 46 meters (5-150 feet) per minute.

In accordance with a preferred embodiment the conveyor microwave oven is coupled to a thermal imaging device, vision system, near-infrared (NIR) imaging, vision systems, inline checkweigher, infrared sensor, or a feedback control system.

In accordance with another preferred embodiment the infrared searing unit is coupled to a thermal imaging device, vision system, near-infrared (NIR) imaging, vision systems, inline checkweigher, infrared sensor, or a feedback control system.

In accordance with a preferred embodiment the method further comprises transferring the sheets of bacon slices to a packaging machine for sealing in a modified atmosphere package.

In accordance with another preferred embodiment the method further comprises casing, taping, and palletizing packages.

In accordance with a preferred embodiment a series of parallel microwave oven-searing unit assemblies are arranged.

In accordance with another preferred embodiment a multi-cavity microwave oven is used, optionally a 2-6 cavity microwave oven or a 2-5 cavity microwave oven.

The invention is defined by the appended set of claims.

### BRIEF DESCRIPTION OF THE FIGURES

**Figure 1** is a flow chart of exemplary method for making ready-to-eat bacon with pan-fried bacon characteristics.
**Figure 2** depicts an exemplary plant lay-out.
**Figure 3** depicts a detail of a microwave oven including monitoring equipment.
**Figure 4** depicts a detail of a searing unit, *e.g*., an open-flame unit (not according to the invention) or infrared searing unit, (according to the invention). including monitoring equipment.

### DETAILED DESCRIPTION

In order that the invention herein described may be fully understood, the following detailed description is set forth.

### Definitions

Unless defined otherwise, all technical and scientific terms used herein have the same meaning as those commonly understood by one of ordinary skill in the art to which this invention belongs.

As used in the description herein and throughout the claims that follow, the meaning of "a," "an," and "the" includes plural reference unless the context clearly dictates otherwise.

"Bacon," as used herein, refers broadly to cured meat of several parts of a pig. In America, bacon most commonly refers to the cured and smoked pork belly. The pork is cured by applying a curing agent to the meat via a dry rub, immersion in a brine solution, or injection with a brine solution. The curing agent, such as sodium nitrite and/or saltpeter, is a color fixative that gives cured meat its pink color. The bacon is, then, usually smoked or dried. Other ingredients and flavors can be added during the injection process. Common smoke flavors are that of different types of wood; with applewood and hickory being two popular smoke flavors.

Bacon can be made from several different cuts of meat. Streaky bacon, pancetta, and American bacon come from the pork belly. Middle bacon comes from the side of the pig. Back bacon is made from the loin of the pig. Also called Irish Bacon or Canadian bacon, it is meatier and leaner than other bacon. Cottage bacon is thinly sliced lean pork meat from the shoulder of a pig. Jowl bacon is the cured and smoked cheeks of a pig.

"Finishing," as used herein, refers broadly to the second process of cooking a food product, after an initial cooking period. For example, "finishing" may refer to cooking a partially cooked food product by a different method than the first method (e.g., cooking in a searing unit, namely infrared searing unit (according to the invention) or a gas searing unit (not according to the invention) after microwaving a food product).

"Pan-fried bacon," as used herein, refers broadly to bacon prepared by frying. Bacon prepared in this manner has a smoky flavor, a brown color, and crispy texture. Pan-frying is a popular method of preparing bacon in the United States.

### Simulating Pan-Fried Bacon

The disclosure provides methods and systems to simulate the taste of pan-fried bacon using a combination of microwave oven cooking and a searing process. Pan-fried bacon has a distinct flavor, odor, appearance, texture, and color. Bacon prepared in a microwave does not share these same properties and is also considered less desirable by consumers than pan-fried bacon. Further microwave bacon generally does not get the desired brown appearance or the crispy texture of pan-fried bacon. In order to achieve a pan fried flavor, food service operators and consumers must cook raw bacon on a grill or in a pan. This method produces grease that must be collected and disposed. Precooked bacon that delivers pan fried attributes will only need to be heated with no appreciable grease generated. This would reduce the cost of preparing bacon for food service operators, and also provide convenience for in home consumers.

In an aspect not part of the present invention, the inventors surprisingly discovered that the combination of microwave oven cooking at about an internal temperature of 71-82°C (160-180°F), optionally about 71°C (about 160°F), and finishing in a searing unit, the flame temperature is about 260-538°C (about 500-1000°F) depending on flame setting, results in a rapid method for preparing bacon that has strong characteristics of pan-fried bacon. The success in simulating the taste, texture, appearance, and odor of pan-fried bacon using combination of microwave oven cooking and a searing unit was unexpected because searing the bacon was expected to char the bacon and not finish the bacon in such a manner as it satisfactory simulated the flavor, odor, and texture of pan-fried bacon. Further, microwave oven cooking has failed to generate bacon with satisfactory appearance, odor, texture, and flavor characteristics similar to those of pan-fried bacon.

According to the invention the inventors also surprisingly discovered that the combination of microwave oven cooking the bacon to a temperature of about 66-104°C (about 150-220°F), optionally about 79-93°C (about 175-200°F), and finishing in an infrared searing unit at a temperature of about 93-149°C (about 200-300°F), optionally about 110-127°C (about 230-260°F), results in a rapid method for preparing bacon that has strong characteristics of pan-fried bacon. Preferably, 4-20 second in the infrared searing unit. For examples, 8, 9, or 10 seconds, *e.g*., 8-10 seconds in the infrared searing unit. The bacon in the infrared searing unit is cooked to a temperature of from about 93-149°C (about 200-300°F), preferably about 110-127°C (230-260°F). The success in simulating the taste, texture, appearance, and odor of pan-fried bacon using combination of microwave oven cooking and an infrared searing unit was unexpected because searing the bacon was expected to char the bacon and not finish the bacon in such a manner as it satisfactory simulated the flavor, odor, and texture of pan-fried bacon. Further, microwave oven cooking has failed to generate bacon with satisfactory appearance, odor, texture, and flavor characteristics similar to those of pan-fried bacon.

### Process for development of simulation of pan-fried bacon

A demand exists in the market for pre-cooked bacon with similar savory notes found in pan-fried bacon. The inventors made a number of attempts to simulate this pan-fried flavor in pre-cooked bacon via numerous tests using different pickle formulations and ingredients, but with no success.

Among the attempts to develop bacon with pan-fried notes, the inventors made a test pickle using Red Arrow^{®} "Caramelized Butter" attempting to duplicate some of the caramelized-type flavor present in pan-fried bacon. Additionally, they made a test pickle using a Red Arrow^{®} "Butter Flavor." Neither of these attempts successfully captured the flavor notes of pan-fried bacon.

Moving on, the inventors performed a product cutting using pre-cooked bacon samples prepared with Red Arrow^{®} "Bacon Enhancer/Pan-Fried Bacon" flavor. Bacon cheeseburgers, without condiments, were used for a sandwich build. The pre-cooked bacon prepared with the "Bacon Enhancer/Pan-Fried Bacon" flavor was compared to standard pre-cooked bacon and to an applewood raw bacon prepared on a griddle. The applewood raw bacon was preferred and the flavor of the "Pan-Fried" flavored bacon did not carry strongly on a sandwich build. Again, the attempt was not successful.

In another attempt, the inventors injected pork bellies with a second variation of "Bacon Enhancer/Pan-Fried Bacon" flavor. Subsequently, another cutting was performed using bacon cheeseburgers. Although the test product was excellent as a center of the plate product, the flavor did not have the intensity or savory notes that pan-fried bacon had in a sandwich build; resulting in an another failed attempt.

The inventors also used microwave packaging technology, utilizing susceptors, to enhance the reheating of pre-cooked bacon in order to deliver a "pan-fried" flavor. The inventors purchased microwavable prepared foods that had packaging that utilized susceptor technology. A trial was performed to determine whether susceptors would intensify the cook and create a pan-fried texture and flavor upon microwave heating. The inventors prepared bacon using the microwave packaging from these products. Some improvement in flavor and savory notes was achieved, but it still did not satisfactorily simulate a pan-fried flavor. The cooking was inconsistent and the product was burnt at contact points.

In yet another attempt, the inventors ran a series of four different pickle formulations utilizing a third variation of "Bacon Enhancer/Pan-Fried Bacon" flavor. The formulations contained differing levels of the "Pan-Fried Bacon" flavor, as well as smoke flavorings. Later, a fifth pickle formulation was run utilizing this same variation of "Bacon Enhancer/Pan-Fried Bacon" flavor. None of these attempts were successful in simulating a pan-fried flavor.

None of the formulation, packaging, or ingredient modifications attempted, utilizing only microwave oven cooking methods, were successful; and the inventors turned to the combination of microwave oven cooking with a searing cooking period to simulate pan-fried bacon. The combination of cooking by microwave oven and finishing by searing produced the unexpected result of simulating the flavor, consistency, color, appearance, and aroma of pan-fried bacon. Accordingly, the inventors varied numerous parameters and tried several possible choices until they arrived at a successful result, although the prior art gave no indication of which parameters were critical or no direction as to which of the many possible choices was likely to be successful.

### Process for Simulating Pan-Fried Bacon

In the process of this disclosure, processed slabs are sliced onto a microwave belt were the product is moved into the microwave oven cavity to be processed into pre-cooked bacon. As the slices enter the microwave oven cavity they are bombarded with microwave energy causing friction, and in return, cooking the strips until the product attains a 30-60% yield (*e.g.,* 36-42% yield). The product then exits the microwave oven cavity and transitions onto a stainless steel belt entering into a searing machine, *e.g*., an open flame unit (not according to the invention) or infrared searing unit (according to the invention) reducing the cook yield (70-95%) and increasing the cook temperature. Both the cook temperature and yield will be achieved before exiting the searing chamber. Upon exiting the searing chambers, *e.g*., an open-flame unit (not according to the invention) or infrared searing unit (according to the invention), the strips are transitioned back onto a takeaway conveyor to be sorted, sheeted, and packaged.

### Description of Bacon Products

Bacon prepared by microwave alone is flat with uniform appearance. The current method of microwave alone looks and tastes nothing like frying bacon in a pan. In contrast, the methods described herein replicates pan fried preparation results in a product with a wavy appearance, non-uniform color with some darker edges (similar to pan fried preparation), and flavor notes that convey similar caramelization as found in pan frying. The cooked color of bacon slices prepared in accordance with the methods described herein is a medium to dark reddish brown with golden brown fat. Texture has crisp, firm bite. Product has aroma of fresh cooked bacon. The bacon products made by the methods described herein exhibit a wavy pan - fried appearance with a dark ring around the external edge of the strip. Texture has crisp firm bite with a charred smoky flavor. Thus, the pan-fried bacon slice product exhibits a slight dark ring around the perimeter of the strip. The product is light brown with a wavy appearance as if the product was cooked in a frying pan. The bacon prepared by the methods described herein carry a savory smoke flavor with notes of sweetness and salt similar to pan-fried bacon.

*Thickness-*The bacon slices may have a thickness of about 0.73 mm, 1.59 mm, 1.81 mm, 2.82 mm or 3.18 mm (about 1/32", 1/16", 1/14", 1/9", or 1/8"). The bacon slab may be cut to a thickness of about 3.1-3.5 slices per cm (about 8-9 slices per inch). The bacon slab may be cut to a thickness of about 5.5-6.3 slices per cm (about 14-16 slices per inch). The bacon slab may be cut to a thickness of about 2.8-7.9 slices per cm (about 7-20 slices per inch). The bacon slab may be cut to a thickness of about 2.8, 3.1, 3.3, 3,5, 3.9, 4.3, 4.7, 5.1, 5.5, 5.9 or 6.3 slices per cm (about 7, 8, 8.5, 9, 10, 11, 12, 13, 14, 15, or 16 slices per inch).

*Heat*- The bacon slices may be cooked in a microwave oven to an internal temperature of about 38-99°C (about 100-210°F), optionally about 71-82°C (about 160-180°F), optionally about 71°C (about 160°F). The bacon slices may be cooked in a microwave oven to an internal temperature of about 71-99°C (about 160-210°F), optionally about 71-82°C (about 160-180°F), optionally about 71-74°C (about 160°F or 165°F). The bacon slices may be cooked in a microwave oven to an internal temperature of about 37.8, 43.3, 48.9, 49.4, 50, 50.6, 51.1, 51.7, 52.2, 52.8, 53.3, 53.9, 54.4, 55, 55.6, 56.1, 56.7, 57.2, 57.8, 58.3, 58.9, 59.4, 60, 60.6, 61.1, 61.7, 62.2, 62.8, 63.3, 63.9, 64.4, 65, 65.6, 66.1, 66.7, 67.2, 67.8, 68.3, 68.9, 69.4, 70, 70.6, 71.1, 71.7, 72.2, 72.8, 73.3, 73.9, 74.4, 75, 75.6, 76.1, 76.7, 77.2, 77.8, 78.3, 78.9, 79.4, 80, 80.6, 81.1, 81.7, 82.2, 82.8, 83.3, 83.9, 84.4, 85, 85.6, 86.1, 86.7, 87.2, 87.8, 90.6, 93.3, 96.1, and 98.9°C (about 100, 110, 120, 121, 122, 123, 124, 125, 126, 127, 128, 129, 130, 131, 132, 133, 134, 135, 136, 137, 138, 139, 140, 141, 142, 143, 144, 145, 146, 147, 148, 149, 150, 151, 152, 153, 154. 155, 156, 157, 158, 159, 160, 161, 162, 163, 164, 165, 166, 167, 168, 169, 170, 171, 172, 173, 174, 175, 176, 177, 178, 179, 180, 181, 182, 183, 184, 185, 186, 187, 188, 189, 190, 195, 200, 205, and 210°F). The bacon slices may be cooked in a microwave oven to an internal temperature of about 71°C (about 160°F). The bacon slices may be cooked in a microwave oven to an internal temperature of about 74, 77, 79, or 82°C (about 165, 170, 175, or 180°F). The bacon slices may be cooked in a microwave oven to a temperature of about 79°C (about 175°F). The bacon slices may be cooked in a microwave oven to a temperature of about 77, 79, 82, 85, 88, 91, 93, 96, 99, or 104°C (about 170, 175, 180, 185, 190, 195, 200, 205, 210, or 220°F).

The bacon slices are finished in a searing unit, *e.g.,* an open-flame unit (not according to the invention) or infrared searing unit (according to the invention). In an aspect not according to the invention, the bacon slices may be cooked in a searing unit at a flame temperature at about 121-538°C, 177-538°C, or 260-538°C (about 250-1000°F, 350-1000°F, or 500-1000°F). The bacon slices may be cooked in a searing unit with an air temperature of about 232-260°C (about 450-500°F).

According to the invention the bacon slices may be cooked in an infrared searing unit at a temperature at about 93-149°C (about 200-300°F). Air temperature in infrared is 149-316°C (300-600°F) and the IR emitter is 93-593°C (200-1 100°F). The bacon slices may be cooked in an infrared searing unit with an air temperature of 149-316°C (about 300-600 °F).

*Time-The* bacon slices may be cooked in microwave oven for about 40-240 seconds, for example about 40, 45, 40, 55, 60, 65, 70, 75, 80, 85, 90, 95, 100, 105, 110, or 120 seconds. The bacon slices may be cooked in microwave oven for about 80-90 seconds. Preferably, the bacon slices may be cooked in microwave oven for about 30-150 seconds. More preferably, the bacon slices may be cooked in microwave oven for about 60-105 seconds. The bacon slices may be cooked in a microwave oven for about 1 minute, 1 minute 30 seconds, 2 minute, 2 minute 30 seconds, or 3 minutes. For example, the bacon slices may be cooked in a microwave oven for about 80-120 seconds, *e.g.,* 80 seconds.

In an aspect not part of the present invention, the bacon slices may be seared in searing unit for about 3-20 seconds, 4-12 seconds, 6-12 seconds, or about 6-9 seconds. The bacon slices may be seared in a searing unit about 3, 4, 6, 9, 12, or 20 seconds. The bacon slices may be seared in a searing unit about 12 seconds. The bacon slices may be seared in a searing unit for about 1, 1.5, 2, 2.5, 3, 4, 5, 6, 7, 8, 9, or 10 minutes.

According to the invention the bacon slices are finished in an infrared searing unit for about 3-20 seconds, 4-12 seconds, 6-12 seconds, or about 6-9 seconds. For example, the bacon slices may be finished in an infrared searing unit for about 3, 4, 5, 6, 7, 8, 9, 10, 15, seconds. Preferably, the bacon slices may be finished in an infrared searing unit about 3, 4, 6, 9, 12, or 20 seconds. More preferably, the bacon slices may be finished in an infrared searing unit about 8, 9, 10, 11, or 12 seconds.

*Flame intensity* (not part of the present invention)-The searing unit may be arranged to apply flame directly to the bacon slices. The flame may be arranged as to indirectly apply the flame to the bacon slices. The searing unit flames may be adjusted for varying angles relative to the bacon slices. For example, the flames may be applied at an angle of 30°, 60°, 90°, 120°, 150° to the bacon slice. The flames may engulf the top side of the bacon slices. The flames may engulf the bottom side of the bacon slices. The flames may engulf both the top and the bottom side of the bacon slices. The searing unit may be run at about 1.5 to 2.2 million BTU.

*Infrared Energy*- According to the invention the infrared searing unit may be arranged to apply infrared heat directly to the bacon. The infrared (IR) heat may be generated by gas-fired and/or electrical components. A gas-fired searing unit may be configured to provide direct flame heat to a product. Alternatively, a gas-fired searing unit may be configured to provide infrared heating. Infrared energy has a wavelength of 1 µm -1 mm with a frequency of 300 THz-300 GHz. The infrared searing unit may heat the bacon using IR wavelength for 4-20 seconds. The infrared searing unit may be electric or gas-fired.

*Cure*- The bacon may be treated with a dry cure. A cure may comprise the following ingredients: (1) sugar including but not limited to sucrose, raw sugar, natural sugar, organic sugar, brown sugar, organic cane syrup, organic cane sugar, white sugar, natural brown sugar, muscovado sugar, refined sugar, molasses, confectioners' sugar (powdered sugar), fruit sugar, milk sugar, malt sugar, granulated guar, beet sugar, and superfine (castor) sugar; (2) salt including but not limited to natural salt, natural sea salt, natural rock salt, sea salt, sodium chloride, table salt, natural hand-harvested salt, rare artisan salt, smoked sea salt, and gourmet sea salt); (3) water; (4) a nitrite source including but not limited sodium nitrate, potassium nitrate, sea salt, and vegetable juice powder; (5) liquid smoke; (6) spices (in liquid or powder form); (7) seasonings (in liquid or powder form); (8) sodium erythorbate; and/or (9) any combination of (1)-(8) to form a dry cure. The cure may be injected into a bacon slab using mechanical injector.

Meat-Although the description refers to bacon it understood that this is not intended to limit the scope or applicability of the disclosure. As used herein, the term "bacon" may be made from red meat *(e.g.,* beef, pork, veal, buffalo, and lamb or mutton) and/or poultry meat (e.g., chicken, turkey, ostrich, grouse, goose, guinea, and duck). The meat used in the present disclosure can be "organic," "natural," "Kosher," and/or "Halal." In one case, the bacon may be pork, preferably cured pork. The meat can be certified "organic" and/or "natural" by the appropriate state or Federal authorities (*e.g.*, FDA and USDA) and/or by meeting the appropriate standards set forth by said authorities.

*Cook vield*-The cook yield refers broadly to the weight of the food product at the end of the process compared to the beginning of the process [*e.g.*, (end weight/beginning weight)*100%]. The cook yield of the bacon slices exiting the microwave may be about 35-60%, 45-50%, 35-65%, 35-45%, 30-40%, or 45-50%. The cook yield of the bacon slices exiting the searing unit after microwave cooking may be about 70-95%, 85-90%, 85-88%, 83-93%, 83-88%, or 82-89%. The final cook yield, after microwave and searing, may be 25-40%.

### Equipment

The method for simulating pan-fried bacon may comprise an assemblage of equipment comprising a slicer (*e.g.*, a Grote^{®} slicer) with a slicer speed of about 120-400 slices per minute, *e.g.,* 160-210 slices per minute, coupled to a microwave oven *(e.g.,* a Microdry^{®} microwave oven) with a belt speed of about 0.9-45.7 meter per minute (about 3-150 feet per minute), *e.g.*, 0.9-15.2 meter per minute (3-50 feet per minute), preferably 12.2 or 12.8 meter per minute (40 or 42 feet per minute), coupled to a searing machine (*e.g.*, Cook King^{®} searing unit (not according to the invention) or Afoheat Infrared Searing

Oven (according to the invention)) with a belt speed of about 0.3-18.3 meter per minute (about 1-60 feet per minute), coupled to an interleaver (*e.g.*, American Machine Works^{®} interleaver) coupled to a packaging machine (*e.g.*, Multivac) to package the bacon slices.

A number of different types of ovens may be used with the present invention, including microwave ovens, belt grills, and convection ovens. Multiple ovens and combinations of different oven types also may be used with the present invention. In order to provide rapid control of product quality (as described herein) and to eliminate unnecessary handling steps, it is preferred that the oven(s) be a continuous cooking oven rather than being a batch cooking oven. Continuous cooking ovens can process a substantially continuous supply of uncooked bacon into a substantially continuous supply of cooked bacon without interruption of the process. Continuous cooking ovens may comprise a continuously moving conveyor to carry the bacon into and out of the oven. Furthermore, in order to reduce the complexity of the cooking operation and apparatus and increase the safety of the system, it is also preferred that the oven(s) be able to cook without the addition of fat or oil (or any other supplemental liquid heating medium), agitating the bacon or the use of a pressure or vacuum chamber.

Microwave ovens have been found to provide good control of the cooking rate and quality of the final product, and are preferred. Preferably, a series of microwave ovens are placed end-to-end along the path of the cooking belt. In some cases, multiple ovens may be integrated into a single oven structure containing multiple cooking "cavities" that each contain a cooking unit. These cavities can be thought of as individual ovens, and single "ovens" having multiple cooking cavities are referred to herein as a series of ovens. In a preferred embodiment, a 5-cavity or 2-cavity microwave oven is used, such as those available from Amana Commercial Products Division of Amana, Iowa under the designation QMP2103 RADARLINE. A microwave oven with about 1-6 cavities may be used, *e.g.,* a microwave oven with 2-5 cavities.

The cooking temperature in each cavity (i.e., oven) preferably may be adjusted individually to provide an appropriate cooking rate, and the use of microwave ovens provides relatively fast adjustments to cooking parameters. For example, in one case, earlier cavities operate at a higher energy level (typically measured in units of kilowatts) to heat the bacon, while later cavities operate at a lower energy level to prevent overcooking. In a typical operation, the ovens operate to produce a meat temperatures of about 38-99°C (about 100-210° F), although other temperatures may be used to accelerate or slow the cooking rate It has been found that factors important to properly adjusting the microwave cavities include, *inter alia*: bacon slice temperature, weight of product per unit area of the belt, and most importantly, the moisture content of the product (often correlated to the leanness of the meat) which can vary greatly from one pork belly to the next.

In order to ensure that the bacon obtains the desired final weight reduction, an iterative, feed-forward or feedback quality control process may be used to measure the bacon slice quality and make corresponding adjustments to the oven(s) performing the cooking. Such quality control steps are desirable because raw bacon slices typically have variable properties, such as moisture content, fat content, and the like, that necessitate periodic or continuous adjustment of the oven(s) to ensure continued high quality output.

The quality control process may comprise weighing a sample of cooked bacon and adjusting the cooking parameters, if the weight is not suitable. Later weight measurements may be used to determine whether additional adjustments are necessary. Of course, any other quality control measurements also may be made to determine whether the bacon slice has the desired weight, color, flavor, texture and the like. Advantageously, the quality control process may be used in conjunction with a continuous cooker to provide relatively rapid control of the output. If the output is found to be unsatisfactory, the oven or ovens may be adjusted to provide better results without sacrificing a large amount of product. This benefit is not possible with batch cooking ovens such as kettle cookers, because the final quality of the bacon is unknown until all of the bacon in the batch is cooked. In another embodiment, the quality control process may also include a pre-cook diagnostic apparatus that determines the amount and/or other characteristics of the bacon that is entering the ovens and automatically adjusts the oven output accordingly. An example of such a device and process is described in U.S. Patent No. 6, 157,074. The use of multiple ovens also may allow quality control measurements of the bacon to be taken between the ovens to further improve the quality of the final product. For example, a series of parallel microwave oven-searing unit assemblages may be physically separated for quality control purposes (e.g., different rooms in the same plant). In this manner, any possible problems may be contained to a single unit and not interfere with the operation of the entire plant.

In contrast to prior methods of cooking bacon, the current method cooks the bacon slices two-step process to a lower internal temperature (*e.g.*, 71-82°C (160-180°F)) and includes a further searing step where the bacon slices, after cooking by microwave the bacon slices are sear cooked at a flame temperature of about 260-538°C (about 500-1000°F). This imparts a crispy texture and a "pan-fried flavor" which is desirable to consumers and has eluded the art in the past. Imparts a "crispy bite" similar to pan-fried bacon.

Infrared (IR) searing unit uses a type of radiant heat in the infrared portion (*i.e.,* 1 µm 1000 µm) of the electromagnetic spectrum to heat a product surface that is in the "line-of-sight" to the emitter. One advantage of IR is the transfer of heat energy directly to the product rather than air. In general, this allows IR to heat products 3-4 times quicker than convection, allowing a smaller physical footprint. The high emitter face may reach a temperature of 427°C to 982°C (800°F to 1800°F). IR ovens are available in electric or gas-fired types and each type has a variety of emitters. The infrared searing unit may have 1-10 emitters, preferably 2 emitters.

In contrast to prior methods of cooking bacon, the current method cooks the bacon slices in a two-step process to first temperature (*e.g.*, 79-93°C (175-200°F)) and includes a further infrared searing step where the bacon slices, after cooking by microwave the bacon slices are finished in an infrared searing oven to a second temperature of about 110-127°C (about 230-260°F). This imparts a crispy texture, *e.g.*, "crispy bite" similar to pan-fried bacon, and a "pan-fried flavor" which is desirable to consumers and has eluded the art in the past.

Texture Analyzers and analytical instrumentation for testing and measuring the textural and physical characteristics of foods are known in the art. For example Texture Technologies of Scarsdale, NY has a number of probes and fixtures that may be used to test parameters of food characteristics including but not limited to crunchiness, crispness, brittleness, hardness, fracturability, shelf life, and packaging effectiveness. Further, texture may be evaluated using a texture analysis system, such as those available from TexVol instruments of Hägersten Sweden. These devices may be used to analyze the texture of the cooked bacon.

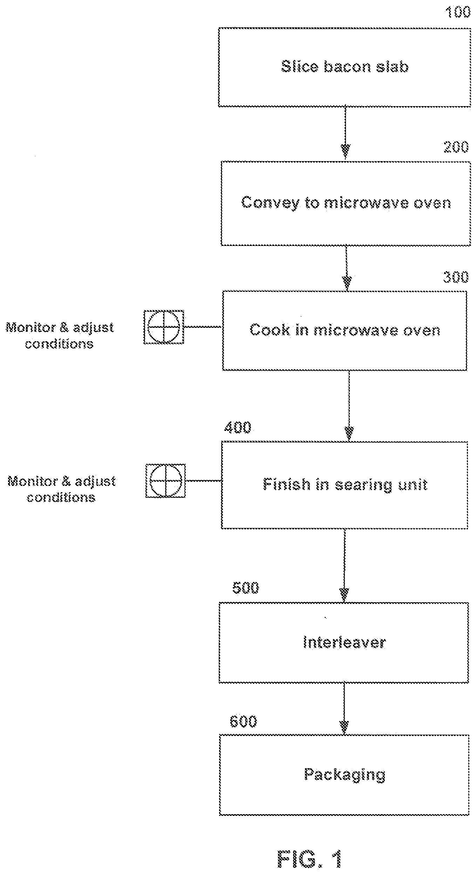

Proceeding now to a description of the drawings, **FIG. 1** shows an exemplary flowchart for carrying out steps of the process of the present invention. The production of the bacon slab-which may be provided upstream of the shown equipment-is not shown, as such equipment and methods for making a bacon slab are well known in the art. For example, green pork bellies may be received, optionally skinned, injected with brine/cure, hung, thermally processed in a smokehouse where natural and/or liquid smoke is applied, removed from smokehouse and chilled, pressed, stored in a refrigerated cooler, and then sliced. In **FIG. 1****,** the slicing **100** is shown to include one or more slicing machines **100,** each of which deposits sliced bacon onto a loading conveyor **200.** A single slicing machine **100** is shown, but other slicing machines may deposit bacon slices onto the loading conveyor or other conveyors leading to the microwave oven **300.** The loading conveyor terminates at a traversing conveyor where product is uniformly distributed onto a continuous conveyor **201** of the microwave oven **300.** A microwave oven may be used, such as Model No. QMP2103 manufactured by Amana, located in Iowa. Examples of continuous manufacturing processes for cooking bacon are described in U.S. Patent No. 5,999,925.

The method comprises includes placing the bacon slices in file onto a conveyor belt **200.** The slices are arranged in single file, one behind another, or preferably, in three to six slices per lane. The conveyor belt transfers the bacon slices to microwave oven **300.** The positioning of the slices may be done by the Grote slicer **100.** Positioning of the cooked bacon slices in file on the conveyor belt **200** can also be accomplished manually, for example, by an operator placing the cooked bacon slices onto marked areas on a conveyor belt. For example, double 3-lane Grote horizontal bandsaws may be used for slicing. A bacon trimmer may be included and can be sized to accommodate the width of the conveyor belt of various types and sizes of cooking devices. The bacon trimmer can be equipped with one or more tractors or similar transferring means, one for each file or line of bacon slices. Further, the equipment assemblages may be vertically tiered (*e.g*., stacked on top of each other in different levels) to allow a maximization of the use of plant space.

The energy used in the microwave oven **300** may be generated by a remote microwave generator. In other cases, the loading conveyor may terminate at a buffer, collator, shaker deck, or retractable loader. The output from the microwave oven is deposited on another transfer conveyor for being moved toward searing unit **400,** *e.g.,* an open-flame unit (not according to the invention) or infrared searing unit (according to the invention). The microwave oven cooks the bacon to a temperature of about 79-93°C (about 175-200°F). Additionally, thermal imaging, near-infrared (NIR) imaging, sensors, or vision systems may coupled with the microwave oven to allow control of microwave power, belt speed, air flow, and air temperature. Sensors and other control systems may also be coupled with the infrared searing unit **400** to allow monitoring of the production process (*e.g*., temperature, flame intensity, air flow).

As product passes through the searing unit **400,** *e.g.,* an open-flame unit (not according to the invention) or infrared searing unit (according to the invention) it is seared as discussed herein. The searing unit **400,** *e.g.,* an open-flame unit (not according to the invention) or infrared searing unit (according to the invention), finishes the microwaved bacon , preferably to a temperature of about 71-74°C or 110-127°C (about 160-165°F or 230-260°F). In an open-flame searing unit (not according to the invention), the microwave bacon may be finished over an open flame at a temperature of about 71-74°C (about 160-165°F). This imparts a "pan-fried" flavor and creates a crispy bite similar to pan-fried bacon. Additionally, thermal imaging, sensors, or vision systems may be coupled with the searing unit **400,** *e.g.*, an open-flame unit (not according to the invention) or infrared searing unit (according to the invention), to allow control of flame intensity, belt speed, air flow, and air temperature.

Next the seared product is deposited on a interleaver **500** for transport to a packaging machine **600** then to a metal detector **700** and post-packaging **800.** The bacon slices may be placed on parchment paper at about 2-50 slices per sheet, *e.g.*, about 10-12 slices per sheet. The sheets may be manually stacked in groups of about 2-50 sheets, *e.g.,* about 10-30 sheets. The stack may be transported to a Multivac packaging machine for sealing in a modified atmosphere package. The packaging machine may be a vertical or horizontal packaging machine including but not limited to a vertical Form/Fill/Seal (VFFS) packaging machine, horizontal Form/Fill/Seal (HFFS) packaging machine, or a premade pouch packaging machine. The packages may be cased, taped, and palletized. Further, the packaging may be modified atmosphere (MAP) or vacuum packed. The cooking area is illustrated in schematic form only, as that equipment, in and of itself, is conventional.

Accordingly, the inventor surprisingly discovered that the combination of the use of microwave oven cooking and finishing in a searing unit (*e.g*., infrared searing unit (according to the invention) or open-flame searing unit (not according to the invention)) unexpectedly produced a bacon slice with similar flavor, odor, color, texture, and flavoring to pan-fried bacon.

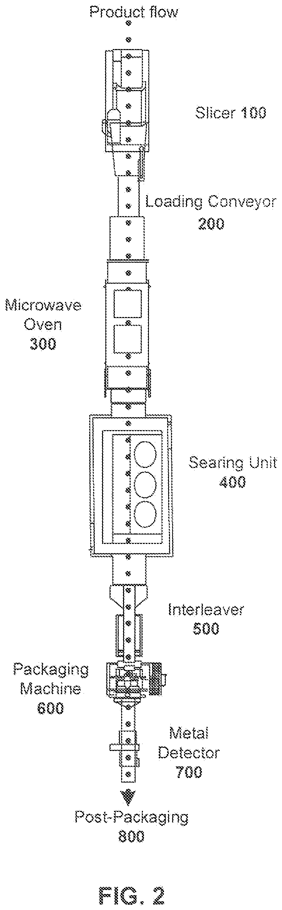

**FIG. 2** shows an exemplary plant lay-out for carrying out steps of the process of the present invention. The production of the bacon slab-which may be provided upstream of the shown equipment-is not shown, as such equipment and methods for making a bacon slab are well known in the art. In **FIG. 1****,** the slicing **100,** loading conveyor **200,** microwave oven **300,** searing unit **400,** *e.g.*, an open-flame unit (not according to the invention) or infrared searing unit (according to the invention), interleaver **500**, and packaging unit **600** is shown to include one or more slicing machines **100**, each of which deposits sliced bacon onto a loading conveyor **200**. A single slicing machine **100** is shown, but other slicing machines may deposit bacon slices onto the loading conveyor or other conveyors leading to the microwave over **200**. The loading conveyor terminates at a traversing conveyor where product is uniformly distributed onto a continuous conveyor of the microwave oven **200**. The energy used in the microwave oven **300** may be generated by a remote microwave generator. In other embodiments, the loading conveyor may terminate at a buffer, collator, shaker deck, or retractable loader. The output from the microwave oven is deposited on another transfer conveyor for being moved toward the searing unit **400**, *e.g.,* an open-flame unit (not according to the invention) or infrared searing unit (according to the invention).

unit. As product passes through the searing unit **400,** *e.g.,* an open-flame unit (not according to the invention) or infrared searing unit (according to the invention), it is seared as discussed herein. Finally, seared product is deposited on a interleaver **500** for transport to a packaging machine **600** then to a metal detector **700** and post-packaging **800.** The packaging machine may be a vertical or horizontal packaging machine including but not limited to a vertical Form/Fill/Seal (VFFS) packaging machine, horizontal Form/Fill/Seal (HFFS) packaging machine, or a premade pouch packaging machine. Further, the packaging may be modified atmosphere (MAP) or vacuum packed. The cooking area is illustrated in schematic form only, as that equipment, in and of itself, is conventional. Additionally, thermal imaging, sensors, or vision systems may coupled with the microwave oven to allow control of microwave power, belt speed, air flow, and air temperature. The bacon slices in the microwave oven may be cooked to a temperature of about 79-93°C (about 175-200°F). The microwave energy may be from a generator and supplied in top of the oven.

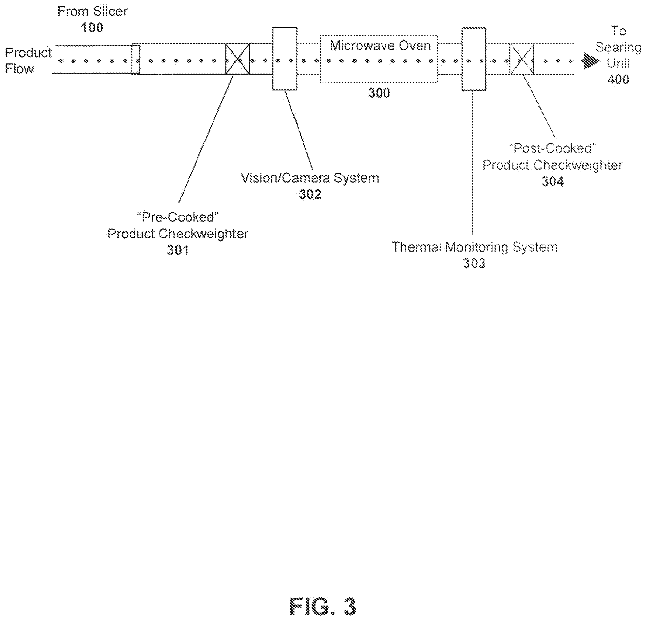

Referring to **Figure 3****,** the microwave energy may be controlled by utilizing inline checkweighers **301** (*e.g.,* at the entrance, middle, and discharge of oven), and/or infrared sensors to monitor the product leaving the oven and feedback to control system to adjust microwave power and/or time the bacon slices are cooked. Additionally, thermal imaging, near-infrared imaging devices, sensors, or vision systems may coupled with the microwave oven to allow control of microwave power, belt speed, air flow, and air temperature. For example, a "pre-dried" product checkweigher **301** may check the weight of the bacon slice after slicing but before cooking in the microwave oven. A vision/camera system **302** may be used prior to entry of the product in the microwave oven for monitoring the product load. After the product exits the microwave oven, thermal monitoring system **303** may be used for monitoring bacon slice quality. A "post-dried" product checkweigher **304** may be used for yield verification prior the bacon slice to be conveyed to the searing unit.

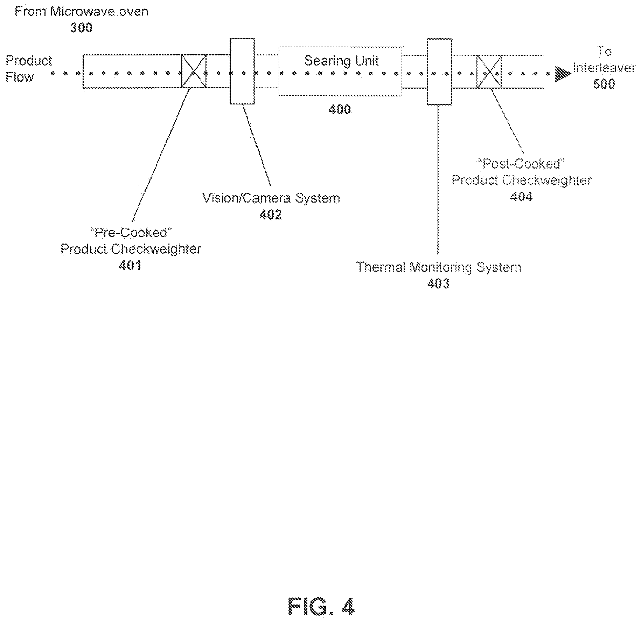

In **FIG. 4****,** the parameters, operating conditions, and product quality in the searing unit may be controlled by utilizing inline checkweighers **401** (*e.g.,* at the entrance, middle, and discharge of searing unit), and/or infrared sensors to monitor the product leaving the searing unit and feedback to control system to adjust flame height, temperature, and/or intensity. Additionally, thermal imaging, sensors, near-infrared (NIR) imaging devices, or vision systems may coupled with the microwave oven to allow control of flame intensity, belt speed, air flow, and temperature. For example, a "pre-dried" product checkweigher **401** may check the weight of the bacon slice after slicing but before finishing in the searing unit. A vision/camera system **402** may be used prior to entry of the product in the searing unit for monitoring the product load. After the product exits the searing unit, thermal monitoring system **403** may be used for monitoring bacon slice quality. A "post-dried" product checkweigher **404** may be used for yield verification prior the bacon slice to be conveyed to the interleaver **500.**
The examples contained herein are offered by way of illustration and not by any way of limitation.

### EXAMPLES

### EXAMPLE 1

### SIMULATING SEARING OPERATION (comparative)

A process for the simulating of a searing operation was tested. Using a sample size of approximately 15 pieces with a slice thickness of about 8-9 slices per inch, the microwave product was cooked down to about 45% cook yield. The 45% cooked product was finished in a COOK KING^{®} searing unit. The product was returned for evaluation with times and temperatures. The times ranged from 1 minute to 1 minute and 45 seconds in microwave, 30 seconds to 2 minutes 30 seconds in microwave with 4 seconds to 20 seconds in searing machine, for a total cooking time of about 1 minute to almost three minutes combined (e.g., 120 seconds in the microwave and 6-12 seconds in the searing unit). The product was sampled for taste profile as well as visual appearance. All finished product attributes simulate those of pan-fried bacon.

### EXAMPLE 2

### SIMULATING SEARING OPERATION (comparative)

A process for the simulating of a searing operation was tested. Using a sample size of approximately 15 pieces with a slice thickness of about 8-9 slices per inch, the microwave product was cooked down to about 45% cook yield. The 45% cooked product was finished in a COOK KING^{®} searing unit. The product was returned for evaluation with times and temperatures. The time for cooking was reduced and the flame intensity was increased with the times ranging from 6-9 seconds with intensified flame coverage. The flame engulfs the top side of the product. The product was sampled for taste profile as well as visual appearance. All finished product attributes simulate those of pan-fried bacon. The test was completed to determine feasibility of placing searing cavity in line with microwave oven cavity from a capacity analysis. The test proved that searing cavity length would be capable of running in line with microwave oven cavity. The samples were sent for cutting and found to achieve desired outcome.

### EXAMPLE 3

### SIMULATING SEARING OPERATION (comparative)

A process for the simulating of a searing operation was tested. Using a sample size of approximately 15 pieces with a thinner slice thickness of about 14-16 slices per inch, the microwave product was cooked down to about 45% cook yield. The 45% cooked product was finished in a COOK KING^{®} searing unit. The product was returned for evaluation with times and temperatures. The searing cavity was adjusted to accommodate a thinner product. All finished product attributes simulate those of pan-fried bacon.

### EXAMPLE 4

### PAN FRIED BACON TEST (comparative)

Three packages of 100 count pre-cooked bacon ran through the microwave at a facility to a cook level of approximately 45%. The product was sent to simulate the proposed process and establish run rates based on real time data collection. The following tests were performed over the two day experimental trial.

Pre-cooked bacon off the microwave was reheated in a small conventional microwave to simulate the product coming off an industrial microwave. The product was cooked to an internal temperature of 82°C (180°F). The product was then weighed and placed onto the searing machine conveying system. The conveying system was adjusted to a number of different speeds ranging from 18.3 meter-per-minute (mpm) down to 12.2 mpm (60 feet-per-minute (fpm) down to 40 fpm). The flame intensity was adjusted with the different speeds to determine the optimal product temperature and conveying speeds. Flame intensity ranged from about 260-538°C (about 500 to 1,000°F). Burner configuration was four upper burners and one lower burner. The production yields were calculated to determine shrink for finished product at different flame intensities and dwell times. Flavor profiles were identified and able to be duplicated through the cooking process using dwell times and flame intensities.

This test run established that the simulation of the pan fried bacon flavor was repeatable. The different belt speeds and flame intensities influenced the intensity of the flavor. The placement of the burners may be placed closer together to shorten the length of the searing machine. The inventors found that the searing machine belt speeds were adequate to maintain the current microwave throughput. Also, the current product yields could be maintained by adjusting the flame intensity and dwell time. The inventors also found that the bottom burners were not needed to attain desired flavor profile. These results were unexpected because over the last ten years persons working in the field, including the assignee, have made a number of attempts to duplicate the flavor profile associated with pan fried bacon. This process is the most representative of the flavor associated with pan fried bacon and is applicable to industrialization.

### EXAMPLE 5

### INFRARED SEARING OPERATION (according to the invention)

A process for the simulating of a searing operation was tested using an infrared (IR) searing unit, an AfoHeat Oven, which combines two methods of heat transfer when grilling or coloring meat products. The AfoHeat oven utilizes infrared irradiation complemented by classic convective heat. Direct flamer burn with infrared screen. The dwell time in the IR searing about 4-20 seconds. The air temperature about 260-538°C (about 500-1100°F) inside the IR searing unit.

Each test was distinguished by slice thickness, with five tests run for 2.8, 3.3, 3.5, 3.9, or 4.3 slices/cm (7, 8.5, 9, 10, or 11 slices/inch). For all six tests, one microwave lane and one AfoHeat burner was run. The AfoHeat test unit was run at a belt speed of 4.3 m/min (14ft/min). The AfoHeat oven belt was set at a 62 mm height for all tests, allowing the AfoHeat oven to properly mesh with the height of the microwave oven. 8-10 second. Temperature 260-316°C (500-600°F) belt temperature in Infrared Searing Unit.

Using a sample size of approximately 2.8, 3.3., 3.5, 3.9, or 4.3 slices per cm (7, 8.5, 9, 10, or 11 slices per inch), the product was cooked in a microwave product to a product temperature of about 85-93°C (about 175-200°F). The microwaved bacon was then fed into an AfoHeat oven and finished to a product temperature of about 110-127°C (about 230-260°F). The product was then placed on parchment paper and packaged with an UltraVac.

**TABLE 1: Cook Yields**

| **Slices per inch** | **AfoHeat burner running at** | **Microwave Cook Yield** | **AfoHeat Cook Yield** | **Overall Yield** |
|---|---|---|---|---|
| 7 | 70-85% | 38-56% (38-41%) | 83-92% | 25-40% |
| 8.5 | 70-80% | 36-42% (34-36%) | 85.7-88.5% (85-88%) | 25-40% |
| 9 | 65-75% | 35-52% (35-41%) | 84-89% | 25-40% |
| 10 | 60-75% | 35-54% (35-43%) | 85-88% | 25-40% |
| 11 | 60-70% | 38-49% (38-39%) | 83-85% | 25-40% |

The bacon product cured with high sugar content and LFBN smoke tended to char more than light sugar/no LFBN. In all five tests, the texture, color, and flavor at appropriate yields met "pan-fried" attributes. These results were unexpected because over the last ten years persons working in the field, including the assignee, have made a number of unsuccessful attempts to duplicate the flavor profile associated with pan fried bacon. This process is the most representative of the flavor associated with pan fried bacon and is applicable to industrialization (*e.g.*, scaling up).

## Claims

1. A method for preparing bacon, comprising:
(a) cooking bacon slices in a conveyor microwave oven; and
(b) finishing the bacon slices in an infrared searing unit by searing the bacon slices with the infrared searing unit,
wherein the infrared searing unit uses infrared energy with a wavelength of about 1 µm to 1 mm,
wherein the infrared searing unit uses infrared energy with a frequency of about 300 THz to 300 GHz, and
wherein the infrared searing unit cooks the bacon slices for at least about 3-20 seconds.

2. The method of claim 1 comprising prior to step (a)
(a") providing a bacon slab; and
(a') slicing the bacon slab into the bacon slices.

3. The method of claim 1 or 2, wherein the microwave oven cooks the bacon slices to a temperature of 38°C-107°C (100-225°F), preferably 79°C-93°C (175-200°F).

4. The method of any one of claims 1 to 3, wherein the infrared searing unit cooks the bacon slices to a temperature of 93°C-149°C (200-300°F), preferably 74°C (165°F).

5. The method of any one of claims 1 to 3, wherein the infrared searing unit cooks the bacon slices for 4-12 seconds, 6-9 seconds, or 12 seconds.

6. The method of any one of claims 2 to 5, wherein the infrared searing unit is a conveyor searing unit the belt of which moves at 1.5 to 46 meters (5-150 feet) per minute.

7. The method of any one of the foregoing claims, wherein the conveyor microwave oven is coupled to a thermal imaging device, vision system, near-infrared (NIR) imaging, vision systems, inline checkweigher, infrared sensor, or a feedback control system.

8. The method of any one of the foregoing claims, wherein the infrared searing unit is coupled to a thermal imaging device, vision system, near-infrared (NIR) imaging, vision systems, inline checkweigher, infrared sensor, or a feedback control system.

9. The method of any one of the foregoing claims, wherein the method further comprises transferring the sheets of bacon slices to a packaging machine for sealing in a modified atmosphere package.

10. The method of any one of the foregoing claims, wherein the method further comprises casing, taping, and palletizing packages.

11. The method of any one of the foregoing claims, wherein a series of parallel microwave oven-searing unit assemblies are arranged.

12. The method of any one of the foregoing claims, wherein a multi-cavity microwave oven is used, optionally a 2-6 cavity microwave oven or a 2-5 cavity microwave oven.

## Patentansprüche

1. Verfahren zur Zubereitung von Speck, umfassend:
(a) Garen von Speckscheiben in einem Förderband-Mikrowellenherd; und
(b) Fertiggaren der Speckscheiben in einer Infrarot-Brateinheit durch Anbraten der Speckscheiben mit der Infrarot-Brateinheit,
wobei die Infrarot-Brateinheit Infrarotenergie mit einer Wellenlänge von etwa 1 µm bis 1 mm verwendet,
wobei die Infrarot-Brateinheit Infrarotenergie mit einer Frequenz von etwa 300 THz bis 300 GHz verwendet, und
wobei die Infrarot-Brateinheit die Speckscheiben mindestens etwa 3-20 Sekunden lang gart.

2. Verfahren nach Anspruch 1, umfassend vor Schritt (a)
(a") das Bereitstellen eines Speckstücks; und
(a') das Schneiden der Speckstücks in Speckscheiben.

3. Verfahren nach Anspruch 1 oder 2, wobei der Mikrowellenherd die Speckscheiben auf eine Temperatur von 38°C-107°C (100-225°F), vorzugsweise 79°C-93°C (175-200°F), gart.

4. Verfahren nach einem der Ansprüche 1 bis 3, wobei die Infrarot-Brateinheit die Speckscheiben auf eine Temperatur von 93°C-149°C (200-300°F), vorzugsweise 74°C (165°F), gart.

5. Verfahren nach einem der Ansprüche 1 bis 3, wobei die Infrarot-Brateinheit die Speckscheiben 4-12 Sekunden, 6-9 Sekunden oder 12 Sekunden gart.

6. Verfahren nach einem der Ansprüche 2 bis 5, wobei die Infrarot-Brateinheit eine Förderband-Brateinheit ist, deren Band sich mit 1,5 bis 46 Metern (5-150 Fuß) pro Minute bewegt.

7. Verfahren nach einem der vorhergehenden Ansprüche, wobei der Förderband-Mikrowellenherd mit einem Wärmebildgerät, einem Sichtsystem, einer Nahinfrarot-(NIR)-Bildgebung, Sichtsystemen, einer Inline-Kontrollwaage, einem Infrarotsensor oder einem Rückkopplungskontrollsystem verbunden ist.

8. Verfahren nach einem der vorhergehenden Ansprüche, wobei die Infrarot-Brateinheit mit einem Wärmebildgerät, einem Sichtsystem, einer Nahinfrarot-(NIR)-Bildgebung, Sichtsystemen, einer Inline-Kontrollwaage, einem Infrarotsensor oder einem Rückkopplungskontrollsystem verbunden ist.

9. Verfahren nach einem der vorhergehenden Ansprüche, wobei das Verfahren außerdem das Übertragen der Schichten von Speckscheiben auf eine Verpackungsmaschine zum Versiegeln in einer Verpackung mit modifizierter Atmosphäre umfasst.

10. Verfahren nach einem der vorhergehenden Ansprüche, wobei das Verfahren außerdem das Einhüllen, Verkleben und Palettieren von Paketen umfasst.

11. Verfahren nach einem der vorhergehenden Ansprüche, wobei eine Reihe paralleler Mikrowellenofen-Brateneinheitsbaugruppen angeordnet sind.

12. Verfahren nach einem der vorhergehenden Ansprüche, wobei ein Mikrowellenofen mit mehreren Hohlräumen verwendet wird, wahlweise ein Mikrowellenofen mit 2-6 Hohlräumen oder ein Mikrowellenofen mit 2-5 Hohlräumen.

## Revendications

1. Méthode pour préparer du bacon, comprenant :
(a) la cuisson de tranches de bacon dans un four à micro-ondes à convoyeur ; et
(b) la finition des tranches de bacon dans une unité de saisie à infrarouges en saisissant les tranches de bacon au moyen de l'unité de saisie à infrarouges,
dans laquelle l'unité de saisie à infrarouges utilise de l'énergie infrarouge ayant une longueur d'onde d'environ 1 µm à 1 mm,
dans laquelle l'unité de saisie à infrarouges utilise de l'énergie infrarouge ayant une fréquence d'environ 300 THz à 300 GHz, et
dans laquelle l'unité de saisie à infrarouges cuit les tranches de bacon pendant au moins environ 3 à 20 secondes.

2. Méthode selon la revendication 1 comprenant, avant l'étape (a),
(a") la fourniture d'une flèche de bacon ; et
(a') le tranchage de la flèche de bacon en tranches de bacon.

3. Méthode selon la revendication 1 ou 2, dans laquelle le four à micro-ondes cuit les tranches de bacon à une température de 38 °C à 107 °C (100 à 225 °F), de préférence de 79 °C à 93 °C (175 à 200 °F).

4. Méthode selon l'une quelconque des revendications 1 à 3, dans laquelle l'unité de saisie à infrarouges cuit les tranches de bacon à une température de 93 °C à 149 °C (200 à 300 °F), de préférence de 74 °C (165 °F).

5. Méthode selon l'une quelconque des revendications 1 à 3, dans laquelle l'unité de saisie à infrarouges cuit les tranches de bacon pendant 4 à 12 secondes, 6 à 9 secondes, ou 12 secondes.

6. Méthode selon l'une quelconque des revendications 2 à 5, dans laquelle l'unité de saisie à infrarouges est une unité de saisie à convoyeur dont la courroie se déplace à 1,5 à 46 mètres (5 à 150 pieds) par minute.

7. Méthode selon l'une quelconque des revendications précédentes, dans laquelle le four à micro-ondes à convoyeur est couplé à un dispositif d'imagerie thermique, un système de vision, une imagerie dans le proche infrarouge (NIR), des systèmes de vision, une trieuse pondérale en ligne, un capteur à infrarouges, ou un système de commande à rétroaction.

8. Méthode selon l'une quelconque des revendications précédentes, dans laquelle l'unité de saisie à infrarouges est couplée à un dispositif d'imagerie thermique, un système de vision, une imagerie dans le proche infrarouge (NIR), des systèmes de vision, une trieuse pondérale en ligne, un capteur à infrarouges, ou un système de commande à rétroaction.

9. Méthode selon l'une quelconque des revendications précédentes, dans laquelle la méthode comprend en outre le transfert des feuilles de tranches de bacon à une machine d'emballage pour un scellage dans un emballage à atmosphère modifiée.

10. Méthode selon l'une quelconque des revendications précédentes, dans laquelle la méthode comprend en outre la mise en boîtes, l'étiquetage, et la palettisation des emballages.

11. Méthode selon l'une quelconque des revendications précédentes, dans laquelle une série d'assemblages d'unités de saisie de four à micro-ondes parallèles sont disposés.

12. Méthode selon l'une quelconque des revendications précédentes, dans laquelle un four à micro-ondes à cavités multiples est utilisé, éventuellement un four à micro-ondes à 2 à 6 cavités ou un four à micro-ondes à 2 à 5 cavités.
